# EUROPEAN PATENT SPECIFICATION

(11) **EP 4 179 497 B1**
(45) Date of publication and mention of the grant of the patent: **22.04.2026**
(21) Application number: 21749108.3
(22) Date of filing: 09.07.2021
(51) Int. Cl.: G06T 5/60

(54) **SYSTEM AND METHOD USING CONVOLUTIONAL NEURAL NETWORKS FOR MICROSCOPY IMAGES**
SYSTEM UND VERFAHREN UNTER VERWENDUNG VON NEURONALEN FALTUNGSNETZEN FÜR MIKROSKOPIEBILDER
SYSTÈME ET PROCÉDÉ UTILISANT DES RÉSEAUX NEURONAUX CONVOLUTIONNELS POUR DES IMAGES DE MICROSCOPIE

(30) Priority: 09.07.2020 EP 20185109
(43) Date of publication of application: 17.05.2023
(73) Proprietor: Valitacell Limited, Dublin (IE)
(72) Inventor: THOMPSON, Ben, Sheffield South Yorkshire S8 8QJ (GB)
(74) Representative: Maiwald GmbH
(86) International application number: PCT/EP2021/069227
(87) International publication number: WO 2022/008744

(56) References cited:
- US-A1- 2019 385 282
- DE HAAN KEVIN ET AL: "Deep-Learning-Based Image Reconstruction and Enhancement in Optical Microscopy", PROCEEDINGS OF THE IEEE, IEEE. NEW YORK, US, vol. 108, no. 1, January 2020 (2020-01-01), pages 30 - 50, XP011763178, ISSN: 0018-9219, [retrieved on 20191227], DOI: 10.1109/JPROC.2019.2949575
- CLAIRE LIFAN CHEN ET AL: "Deep Learning in Label-free Cell Classification", SCIENTIFIC REPORTS, vol. 6, no. 1, 15 March 2016 (2016-03-15), pages 1 - 16, XP055442153, DOI: 10.1038/srep21471
- GRETEL M PNG ET AL: "Terahertz Phase Contrast Imaging", PROCEEDINGS OF SPIE, IEEE, US, vol. 5649, 28 February 2005 (2005-02-28), pages 768 - 777, XP002649635, ISBN: 978-1-62841-730-2, DOI: 10.1117/12.582582

## Description

### FIELD

The present disclosure relates to a system and method for processing microscopy images.

### BACKGROUND

Phase contrast images are the gold standard for image quality in microscopy. Phase contrast images exploit the difference in refractive indexes of different materials to differentiate between structures being analysed. Phase contrast images can be used to differentiate between structures having similar transparency, and to examine crystals based on their double refraction.

The concept behind phase contrast imagery is the fact that different structures have different refractive indices which means that structures either bend, refract or delay the light passage through them by different amounts. Such differences in light passage results in light waves passing through different structures to be out of phase with each other, which in turn can be transformed by phase contrast microscopes into amplitude differences that are observable in the eyepieces and are depicted effectively as darker or brighter areas of an image. Phase contrast imagery finds application in biological, medical and geological sciences.

Capturing phase contrast microscopy images requires special hardware and software. One known method includes construction of phase contrast microscopy images from Z planes of brightfield microscopy images. Several brightfield microscopy images of different heights are taken and the height of the Z planes determines the thickness and objective magnifications of the phase contrast image.

US patent publication number US2019/385282, Sasaki Hideki et al describes a system and method for a system and method to improve the quality of an input image. Sasaki discloses the inputs are "multi-variation" images or "multi-modality' images which are a variety of images with different "quality levels" and the target is a high quality image. The disclosed system is complex where the function is to improve the quality of the image. US 2019/385282 A1 relates to image processing and restoration. De Haan et al.: "Deep-Learning-Based Image Reconstruction and Enhancement in Optical Microscopy", Proceeding of the IEEE, IEEE. New York, US, vol. 108, no. 1, January 2020, pages 30-50, XP011763178 provides an overview in the field of computational microscopy.

The known means and methods for capturing phase contrast images are however slow, expensive and difficult to implement.

It is an object to solve this problem in the art by providing a system and method for microscopy images such as phase contrast images.

### SUMMARY OF INVENTION

The present invention relates to a system and method for converting brightfield microscopy images to phase contrast microscopy images, using a convolutional neural network, as set out in the appended claims.

In one embodiment the method as per the present invention includes the steps of firstly obtaining a training data set consisting a plurality of brightfield microscopy images and a plurality of corresponding phase contrast microscopy images. The convolutional neural network is then trained to apply a number of mathematical operations to the data set to recover phase information in the form of an interference pattern from the brightfield images. Further, the trained neural network is applied to reconstruct phase contrast images from brightfield images. The convolutional neural network is further trained to sequentialy update a plurality of its parameters to match the input brightfield microscopy image with the reconstructed phase contrast microscopy image.

A key aspect to the invention is that the invention provides a system and method to turn a brightfield image into a phase contrast image. The important point is that the invention is not interested in improving the quality of the input per se (for example in the sense that an X-ray is not a high quality photograph). The invention is primarily concerned with extracting the phase information from the brightfield image for a specific purpose. The problem of interference associated with brightfield microscopy images is eliminated by the system and method of the present invention. Compared to methods and means known in the art, the present invention provides a much simpler, cost effective and faster means to convert brightfield microscopy images to phase contrast microscopy images.

Imaging devices which are capable of doing phase contrasts imaging are a lot more expensive than those which only do brightfield imaging.

Imaging devices which are capable of doing phase contrasts imaging are a lot more expensive than those which only do brightfield imaging.

In a preferred embodiment of the present invention, the convolutional neural network used is a U-net convolutional neural network.

In another embodiment there is provided a system for processing microscopy images, the system comprises a memory means and processor means. The memory means stores the training data set and the processor means trains the neural network to recover phase information in the form of an interference pattern from the brightfield images and using the trained neural network, phase contrast images are reconstructed from brightfield images. The processor means is further configured to sequentially update a plurality of paraneters of the neural network to match the input brightfield microscopy image with the reconstructed phase contrast microscopy image In one embodiment the system further comprises means for storing, retrieving and displaying the extracted phase contrast images.

There is also provided a computer program comprising program instructions for causing a computer program to carry out the above method which may be embodied on a record medium, carrier signal or read-only memory.

Additionally even when the hardware is capable of doing phase contrast imaging, the image acquisition is much much slower than when running the same instrument in brightfield mode. This is because for phase contrasts several images at different focal heights (Z planes) must be aquired for each sample. Further, mathematical operations can be applied to these Z stack images to contrast a phase contrast image from them.

### BRIEF DESCRIPTION OF DRAWINGS

The invention will be more clearly understood from the following description of an embodiment thereof, given by way of example only, with reference to the accompanying drawings, in which:-
Figure 1 illustrates a convolutional neural network as per a preferred embodiment of the present invention.
Figure 2 illustrates a graphical representation of mean square loss error for each training epoch in a preferred embodiment of the present invention; and
Figure 3 illustrates a set of phase contrast images reconstructed from their corresponding brightfield images in a preferred embodiment of the present invention.

### DETAILED DESCRIPTION OF INVENTION

The present invention discloses a system and method for converting brightfield images to phase contrast images using convolutional neural networks.

The invention works on the principle of using phase information from brightfield microscopy images to reconstruct phase contrast microscopy images. Convolutional neural networks are trained to recover phase information in the form of an interference pattern from brightfield images and the trained network is used to reconstruct phase contrast microscopy images from brightfield microscopy images. Convolutional neural networks use a number filters for extracting features of images through convolution operations and pooling/non-linear activation functions to add non-linear characteristics. In a preferred embodiment of the present invention, a U-net convolutional neural network is trained using mathematical models to convert brightfield microscopy images to phase contrast microscopy images.

The method as per the present invention comprises the steps of obtaining a data set of a plurality of brightfield images and a plurality of phase contrast images, training the neural network with the obtained data set to extract phase information in the form of an interference pattern spread across each brightfield image, and using the trained convolutional neural network to reconstruct a phase contrast image from a brightfield image. The convolutional neural network is further trained to sequentialy update a plurality of its parameters to match the input brightfield microscopy image with the reconstructed phase contrast microscopy image.

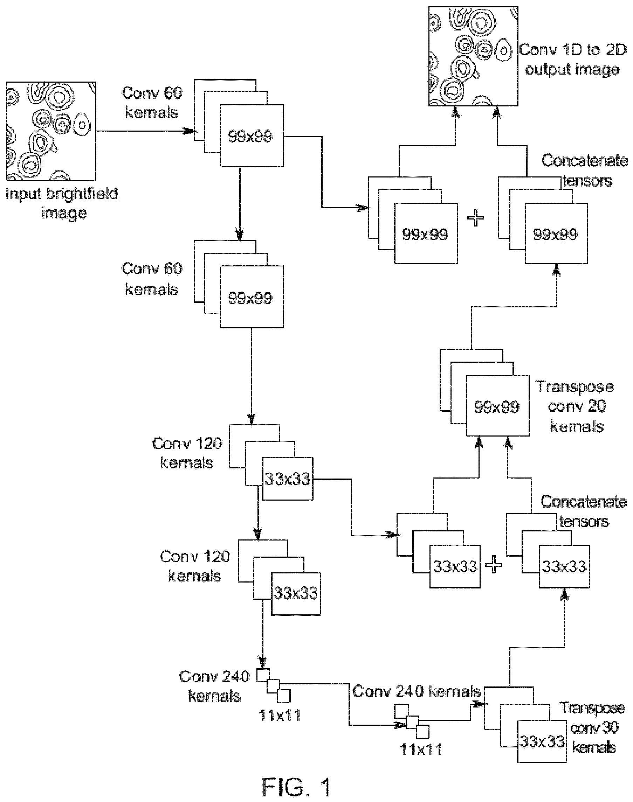

Figure 1 illustrates a convolutional neural network as per a preferred embodiment of the present invention. The network was constructed using TensorFlow using the keras package in Python. In a preferred embodiment of the present invention, a training data set of about 7000 brightfield images and 7000 phase contrast images is used to train the neural network. The training step involves multiple convolution operations at scale, followed by downsizing and further repeating convolution operations. The convolutions are then scaled up. Using a U-net convolutional neural network (or similar network) with concatenations between scales, the higher frequencies are extracted first followed by the lower frequencies.

Tensors are concatenated between layers which allows information transfer between different scales. Parameters of the network are sequentially updated to match the input brighfield microscopy image to the desired output i.e, the reconstructed phase contrast microscopy image. This is enabled by minimizing the pixel-wise sum of squared differences between the input and the desired output.

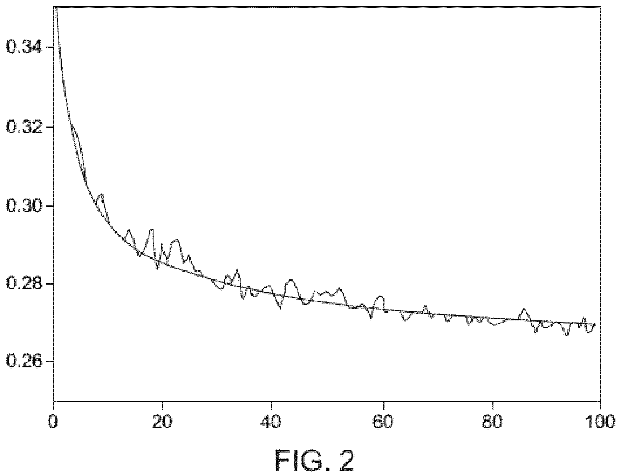

The model as per the preferred embodiment is inspired by deconvolutions via Fourier transforms and is trained over 100 training epochs. Figure 2 illustrates a graphical representation of Mean Squared Error Loss plotted against each training epoch. The mean squared error loss is a loss function which is used to minimize the error in weights. The loss function is used to estimate the loss of the model so that the weights can be updated to reduce the loss on the next evaluation. As seen in Figure 2, the value of the loss function decreases with increasing number of training epochs.

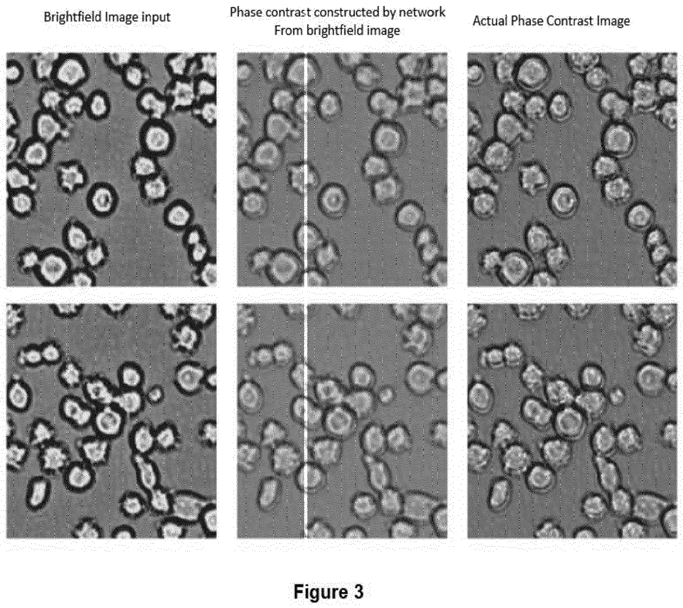

Figure 3 illustrates a set of phase contrast microscopy images reconstructed from their corresponding brightfield microscopy images in a preferred embodiment of the present invention. The actual phase contrast microscopy images have also been shown to demonstrate the effectiveness of the present invention.

The system as per the present invention comprises a memory means or memory module for storing the data set and a processor configured to train the neural network to recover phase information in the form of an interference pattern from brightfield images, reconstruct a phase contrast image using the trained neural network, and sequentialy update a plurality of parameters of the neural network to match the brightfield microscopy image with the reconstructed phase contrast microscopy image.

The system further comprises a module or means for storing and retrieving the reconstructed phase contrast image and means for displaying the reconstructed phase contrast image. As per a preferred embodiment of the present invention, the processing means used is an EC- 2 instance with a Tesla Graphics Processing Unit.

Further, a person ordinarily skilled in the art will appreciate that the various illustrative logical/functional blocks, modules, circuits, techniques/algorithms and process steps described in connection with the embodiments disclosed herein may be implemented as electronic hardware, or a combination of hardware and software. To clearly illustrate this interchangeability of hardware and a combination of hardware and software, various illustrative components, blocks, modules, circuits, and steps have been described above generally in terms of their functionality. Whether such functionality is implemented as hardware or a combination of hardware and software depends upon the design choice of a person ordinarily skilled in the art. Such skilled artisans may implement the described functionality in varying ways for each particular application, but such obvious design choices should not be interpreted as causing a departure from the scope of the present invention.

The process described in the present disclosure may be implemented using various means. For example, the process described in the present disclosure may be implemented in hardware, firmware, software, or any combination thereof. For a hardware implementation, the processing units, or processors(s) may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof.

For a firmware and/or software implementation, software codes may be stored in a memory and executed by a processor. Memory may be implemented within the processor unit or external to the processor unit. As used herein the term "memory" refers to any type of volatile memory or nonvolatile memory.

Furthermore, although elements of the invention may be described or claimed in the singular, the plural is contemplated unless limitation to the singular is explicitly stated.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method of converting brightfield images to phase contrast images for processing microscopy images, the method comprising the steps of:-
a) obtaining a data set comprising a plurality of brightfield microscopy images and a plurality of phase contrast microscopy images;
b) training a convolutional neural network with the data set obtained in step(a), wherein the neural network is trained to recover phase information in the form of an interference pattern from each of the plurality of brightfield images; and
c) applying the trained neural network to reconstruct a phase contrast microscopy image from a brightfield microscopy image.

2. The method as claimed in claim 1, further comprising the step of sequentially updating a plurality of parameters of the convolutional neural network to match the brightfield microscopy image with the reconstructed phase contrast microscopy image.

3. The method as claimed in claim 2 wherein the plurality of parameters of convolutional neural network is sequentially updated by minimizing the pixel-wise sum of squared differences between the brightfiled microscopy image and the reconstructed phase contrast microscopy image.

4. The method as claimed in any of the preceding claims, wherein the convolutional neural network is a U-net convolutional neural network.

5. A system of converting brightfield images to phase contrast images for processing microscopy images, the system comprising:
a memory means adapted to store a data set comprising a plurality of brightfield microscopy images and a plurality of phase contrast microscopy images;
a processor means configured to train a convolutional neural network with the data set, wherein the neural network is trained to recover phase information in the form of an interference pattern from a brightfield microscopy image and to reconstruct the corresponding phase contrast microscopy image, and wherein a plurality of parameters of the convolutional neural network is sequentially updated to match the brightfield microscopy image with the reconstructed phase contrast microscopy image;
means for storing and retrieving the reconstructed phase contrast microscopy image; and
means for displaying the reconstructed phase contrast microscopy image.

6. The system as claimed in claim 5, wherein the processing means is configured to sequentially update the plurality of parameters of the convolutional neural network by minimizing the pixel-wise sum of squared differences between the brightfiled microscopy image and the reconstructed phase contrast microscopy image.

7. The system as claimed in claims 5 or 6 wherein the convolutional neural network is a U-net convolutional neural network.

8. The system as claimed in any of claims 5, 6 or 7 wherein the processing means is a Tesla Graphics Processing Unit.

## Patentansprüche

1. Verfahren zum Umwandeln von Hellfeldbildern in Phasenkontrastbilder zur Verarbeitung von Mikroskopiebildern, wobei das Verfahren die folgenden Schritte umfasst:-
a) Erhalten eines Datensatzes, der eine Vielzahl von Hellfeld-Mikroskopiebildern und eine Vielzahl von Phasenkontrast-Mikroskopiebildern umfasst;
b) Trainieren eines neuronalen Faltungsnetzes mit dem in Schritt(a) erhaltenen Datensatz, wobei das neuronale Faltungsnetz dazu trainiert wird, Phaseninformationen in Form eines Interferenzmusters aus jedem der Vielzahl von Hellfeldbildern wiederzugewinnen; und
c) Anwenden des trainierten neuronalen Faltungsnetzes zum Rekonstruieren eines Phasenkontrast-Mikroskopiebildes aus einem Hellfeld-Mikroskopiebild.

2. Verfahren nach Anspruch 1, weiter umfassend den Schritt des sequentiellen Aktualisierens einer Vielzahl von Parametern des neuronalen Faltungsnetzes, um das Hellfeld-Mikroskopiebild mit dem rekonstruierten Phasenkontrast-Mikroskopiebild abzugleichen.

3. Verfahren nach Anspruch 2, wobei die Vielzahl von Parametern des neuronalen Faltungsnetzes durch Minimieren der pixelweisen Summe von quadrierten Differenzen zwischen dem Hellfeld-Mikroskopiebild und dem rekonstruierten Phasenkontrast-Mikroskopiebild sequentiell aktualisiert wird.

4. Verfahren nach einem der vorstehenden Ansprüche, wobei das neuronale Faltungsnetz ein neuronales U-Net-Faltungsnetz ist.

5. System zum Umwandeln von Hellfeldbildern in Phasenkontrastbilder zur Verarbeitung von Mikroskopiebildern, wobei das System Folgendes umfasst:
ein Speichermittel, das angepasst ist, um einen Datensatz zu speichern, der eine Vielzahl von Hellfeld-Mikroskopiebildern und eine Vielzahl von Phasenkontrast-Mikroskopiebildern umfasst;
ein Verarbeitungsmittel, das so konfiguriert ist, dass es ein neuronales Faltungsnetz mit dem Datensatz trainiert, wobei das neuronale Faltungsnetz dazu trainiert wird, Phaseninformationen in Form eines Interferenzmusters aus einem Hellfeld-Mikroskopiebild wiederzugewinnen und das entsprechende Phasenkontrast-Mikroskopiebild zu rekonstruieren, und wobei eine Vielzahl von Parametern des neuronalen Faltungsnetzes sequentiell aktualisiert wird, um das Hellfeld-Mikroskopiebild mit dem rekonstruierten Phasenkontrast-Mikroskopiebild abzugleichen;
Mittel zum Speichern und Abrufen des rekonstruierten Phasenkontrast-Mikroskopiebildes; und
Mittel zum Anzeigen des rekonstruierten Phasenkontrast-Mikroskopiebildes.

6. System nach Anspruch 5, wobei das Verarbeitungsmittel so konfiguriert ist, dass es die Vielzahl von Parametern des neuronalen Faltungsnetzes durch Minimieren der pixelweisen Summe quadrierter Differenzen zwischen dem Hellfeld-Mikroskopiebild und dem rekonstruierten Phasenkontrast-Mikroskopiebild sequentiell aktualisiert.

7. System nach den Ansprüchen 5 oder 6, wobei das neuronale Faltungsnetz ein neuronales U-Net-Faltungsnetz ist.

8. System nach einem der Ansprüche 5, 6 oder 7, wobei das Verarbeitungsmittel eine Tesla Graphics-Verarbeitungseinheit ist.

## Revendications

1. Procédé de conversion d'images à fond clair en images de contraste de phase pour le traitement d'images de microscopie, le procédé comprenant les étapes de : -
a) l'obtention d'un ensemble de données comprenant une pluralité d'images de microscopie à fond clair et une pluralité d'images de microscopie de contraste de phase ;
b) l'entraînement d'un réseau de neurones à convolution avec l'ensemble de données obtenu à l'étape (a), dans lequel le réseau de neurones est entraîné à récupérer des informations de phase sous la forme d'un motif d'interférence à partir de chacune de la pluralité d'images à fond clair ; et
c) l'application du réseau de neurones entraîné pour reconstruire une image de microscopie de contraste de phase à partir d'une image de microscopie à fond clair.

2. Procédé selon la revendication 1, comprenant en outre l'étape de mise à jour séquentielle d'une pluralité de paramètres du réseau de neurones à convolution pour faire correspondre l'image de microscopie à fond clair avec l'image de microscopie de contraste de phase reconstruite.

3. Procédé selon la revendication 2, dans lequel la pluralité de paramètres de réseau de neurones à convolution est mise à jour séquentiellement en minimisant la somme par pixels des différences carrées entre l'image de microscopie à fond clair et l'image de microscopie de contraste de phase reconstruite.

4. Procédé selon l'une quelconque des revendications précédentes, dans lequel le réseau de neurones à convolution est un réseau de neurones à convolution en U.

5. Système de conversion d'images à fond clair en images de contraste de phase pour le traitement d'images de microscopie, le système comprenant :
un moyen de mémoire conçu pour stocker un ensemble de données comprenant une pluralité d'images de microscopie à fond clair et une pluralité d'images de microscopie de contraste de phase ;
un moyen de traitement configuré pour entraîner un réseau de neurones à convolution avec l'ensemble de données, dans lequel le réseau de neurones est entraîné à récupérer des informations de phase sous la forme d'un motif d'interférence à partir d'une image de microscopie à fond clair et à reconstruire l'image de microscopie de contraste de phase correspondante, et dans lequel une pluralité de paramètres du réseau de neurones à convolution est mise à jour séquentiellement pour correspondre à l'image de microscopie à fond clair avec l'image de microscopie de contraste de phase reconstruite ;
un moyen de stockage et de récupération de l'image de microscopie de contraste de phase reconstruite ; et
un moyen d'affichage de l'image de microscopie de contraste de phase reconstruite.

6. Système selon la revendication 5, dans lequel le moyen de traitement est configuré pour mettre à jour séquentiellement la pluralité de paramètres du réseau de neurones à convolution en minimisant la somme par pixels des différences carrées entre l'image de microscopie à fond clair et l'image de microscopie de contraste de phase reconstruite.

7. Système selon la revendication 5 ou la revendication 6, dans lequel le réseau de neurones à convolution est un réseau de neurones à convolution en U.

8. Système selon l'une quelconque de la revendication 5, la revendication 6 ou la revendication 7 dans lequel le moyen de traitement est une unité de traitement graphique Tesla.
